# FASCICULE DE BREVET EUROPEEN

(11) **EP 0 440 549 B1**
(45) Date de publication et mention de la délivrance du brevet: **17.09.1997**
(21) Numéro de dépôt: 91400201.9
(22) Date de dépôt: 29.01.1991
(51) Int. Cl.: G07F 7/10

(54) **Procédé et dispositif de gestion de transactions utilisant des cartes à microcircuit**
Vorrichtung und Verfahren zum Verwalten von Chipkartentransaktionen
Apparatus and method for managing IC-card transactions

(30) Priorité: 30.01.1990 FR 9001073
(43) Date de publication de la demande: 07.08.1991
(73) Titulaire: GEMPLUS CARD INTERNATIONAL, F-13420 Gémenos (FR)
(72) Inventeur: Le Roux, Jean-Yves, F-75116 Paris (FR)
(74) Mandataire: Schmit, Christian Norbert Marie

(56) Documents cités:
- EP-A- 0 232 058
- EP-A- 0 247 623
- US-A- 4 001 550
- US-A- 4 859 837

## Description

L'invention se rapporte au domaine des systèmes de transactions utilisant des cartes à microcircuit, et plus particulièrement à un procédé, et au dispositif correspondant, de gestion de transactions utilisant de telles cartes.

Classiquement les cartes à microcircuit sont utilisées dans les systèmes de transactions bancaires, et, pour ce type de transactions, l'utilisation de la carte dans un lecteur nécessite la présentation à ce lecteur d'un code confidentiel propre au porteur, autorisant l'exécution de la transaction, dès que celle-ci met en jeu une somme d'argent. D'autres applications peuvent aussi ne pas nécessiter la présentation de ce code confidentiel, notamment si elles ne mettent pas en jeu le microcircuit et utilisent simplement la lecture d'une piste magnétique portée par la carte. Mais actuellement en général, dès que l'application requise utilise le microcircuit, notamment pour enregistrer une transaction dans un espace mémoire prévu à cet effet, la présentation du code du porteur est systématique, quel que soit le montant de la transaction.

Un tel système est parfaitement sécurisé, mais il présente évidemment l'inconvénient d'être lourd et d'utilisation un peu fastidieuse dès lors que le montant des transactions est faible: si l'on conçoit en effet de présenter son code confidentiel pour de gros montants, et que l'on apprécie la sécurité ainsi attachée à de telles transactions, la présentation systématique du code confidentiel pour les achats de faible montant parait disproportionnée par rapport au risque correspondant.

En conséquence pour les cartes multi-usages susceptibles d'être développées dans la période à venir, et notamment pour les cartes de crédits, cartes de téléphone etc..., il convient de traiter de manières différentes les transactions impliquant des montants importants et celles qui ne mettent en jeu que de faibles montants. Une solution à ce type de problème est envisagée dans le document US-A-4 001 550.

L'invention a pour objet un procédé, et un dispositif correspondant, de gestion de transactions utilisant des cartes à microcircuit, permettant d'éviter la présentation systématique du code confidentiel par le porteur pour les transactions estimées au préalable d'enjeu faible, tout en maintenant une sécurité suffisante pour le porteur, et cela par des moyens suffisamment simples.

Selon l'invention, le procédé de gestion de transactions dans un système mettant en oeuvre des lecteurs de cartes et des cartes à microcircuit associées dont les porteurs sont reconnus par le système au moyen de codes porteurs confidentiels et consistant à organiser l'espace mémoire des cartes destiné à l'enregistrement des transactions en au moins une première zone accessible pour des transactions sans présentation systématique du code porteur, est caractérisé en ce qu'une présentation correcte du code par un porteur commande l'écriture de bits d'ouverture d'espaces d'enregistrement dans cette première zone jusqu'à ce que le nombre d'espaces ouverts soit égal à un nombre prédéterminé N, N étant supérieur ou égal à 2.

L'invention a également pour objet un dispositif destiné à la mise en oeuvre de ce procédé.

L'invention sera mieux comprise et d'autres caractéristiques apparaîtront à l'aide de la description qui suit, faite au regard des figures annexées.

La figure 1 est l'organigramme d'un exemple du procédé de gestion selon l'invention.

La figure 2 illustre schématiquement le dispositif destiné à sa mise en oeuvre,selon l'invention;.

Les figures 3a et 3b illustrent la zone mémoire utilisée pour les transactions de montants inférieurs à un seuil, respectivement avant et après présentation du code porteur.

Comme indiqué ci-dessus, le procédé selon l'invention est tel que la présentation du code confidentiel du porteur au lecteur de cartes donne la possibilité au porteur de bénéficier d'un nombre N de "droits" sans avoir à présenter son code à chaque "consommation" de ce droit N>=2 : par exemple le porteur peut bénéficier de N=5 transactions monétiques de montant inférieur à 100 F chacune après chaque présentation du code.

Pour cela, le microcircuit permet d'aiguiller l'enregistrement des transactions correspondantes (par exemple, les transactions inférieures à 100 F) vers une zone comportant un nombre fini d'espaces d'enregistrement de données, et le procédé selon l'invention prévoit, lors de la constitution de la carte à microcircuit un bit initialement à 0 en tête de chaque espace d'enregistrement et susceptible de changer de valeur pour signifier l'ouverture de l'espace d'enregistrement correspondant, sur commande programmée dans le microcircuit dès la constitution de la carte.

Cette commande actionnée par présentation du code porteur ouvre des espaces d'enregistrement non utilisés auparavant jusqu'à ce que le nombre d'espaces ouverts soit égal à N (5 par exemple).

Ainsi au moment de la première utilisation d'une carte neuve, le lecteur demande la composition du code confidentiel et, après réception de ce code et validation par le circuit, celui-ci transmet une commande qui d'une part permet d'accéder à la zone mémoire de transactions dite ZONE I ci-après, prévue pour les transactions de montant important, et d'autre part inverse les bits d'entête de N espaces d'enregistrement dans la zone mémoire de transactions dite ZONE II ci-après, prévue pour les transactions de faible montant, ce qui a pour effet d'ouvrir les droits correspondants à ces N espaces sans recomposer le code.

Si la transaction qui suit est une transaction de montant important, l'enregistrement a lieu dans la zone correspondante, et aucun des N espaces ouverts n'est consommé. Si la transaction est de faible montant l'enregistrement a lieu dans un des N espaces ouverts , et N-1 espaces restent disponibles pour les transactions de faible montant suivantes.

Lors de l'utilisation suivante, le code ne sera pas demandé au porteur, via le lecteur de cartes, tant que les transactions resteront de faible montant et que les espaces d'enregistrement ouverts ne seront pas tous utilisés.

Par contre, le code sera à nouveau demandé dès que le montant de la transaction sera important d'une part, ou, pour une transaction de faible montant, dès que tous les espaces ouverts auront été utilisés: dans ces deux cas la composition du code commandera l'ouverture d'espaces d'enregistrement dans la zone mémoire affectée aux transactions de faible montant, pour ouvrir N nouveaux espaces dans le second cas, lorsque les espaces ouverts précédemment ont été épuisés.

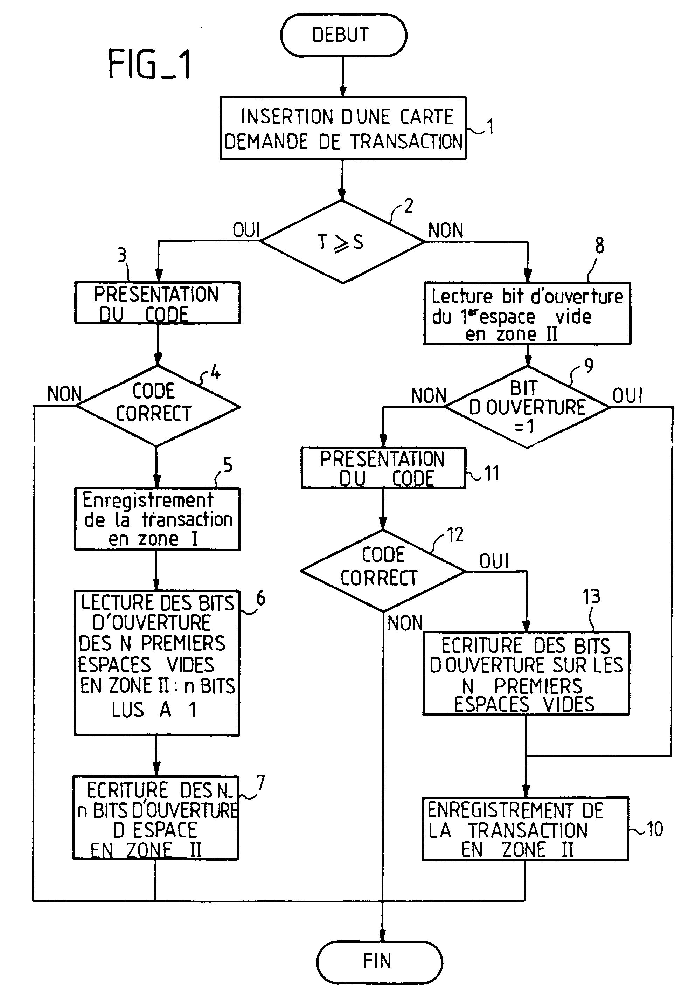

La figure 1 illustre un exemple d'organigramme du procédé de gestion de transactions selon l'invention décrit ci-après.

Après la phase initiale, 1, d'insertion de la carte dans le lecteur et de demande de transaction via le clavier du lecteur, le lecteur demande la présentation du code, étape 3, si le montant de la transaction T demandée correspond à une valeur supérieure ou égale à une valeur de seuil prédéterminée S,lors d'un test, étape 2. Un test sur la valeur du code, étape 4, autorise l'enregistrement de la transaction en ZONE I, étape 5, si le code est correct et refuse la transaction (vers FIN ) si le code n'est pas correct.

Le lecteur peut ne pas tenir compte de cette transaction enregistrée en ZONE I pour la gestion de la ZONE II et l'opération est alors terminée.

Dans le mode de réalisation préféré correspondant à l'organigramme de la figure 1, la présentation correcte du code porteur ayant été effectuée, le lecteur commande la lecture des bits d'ouverture des N premiers espaces vides en ZONE II. Si n bits d'ouverture parmi les N lus sont à 1, alors par logique programmée à l'intérieur du microcircuit ou par logique câblée, les N-n bits suivants sont mis à 1. L'opération est alors terminée.

Lorsque la transaction demandée est de montant inférieur à S, lors du test de l'étape 2, le lecteur commande la lecture du bit d'ouverture du premier espace vide en ZONE II, étape 8, puis teste sa valeur, étape 9. Si le bit est à 1, l'enregistrement de la transaction a lieu immédiatement, étape 10,dans l'espace correspondant en ZONE II.

Par contre, si ce bit est encore à 0, le lecteur demande la composition du code porteur, étape 11, et vérifie s'il est correct, étape 12: si non, la transaction est refusée, vers FIN, et si oui, le lecteur commande le lancement, par la logique interne de la carte, de l'écriture à 1 des bits d'ouverture des N premiers espaces vides en ZONE II, étape 13, puis l'enregistrement de la transaction, étape 10, dans le premier espace ouvert en ZONE II.

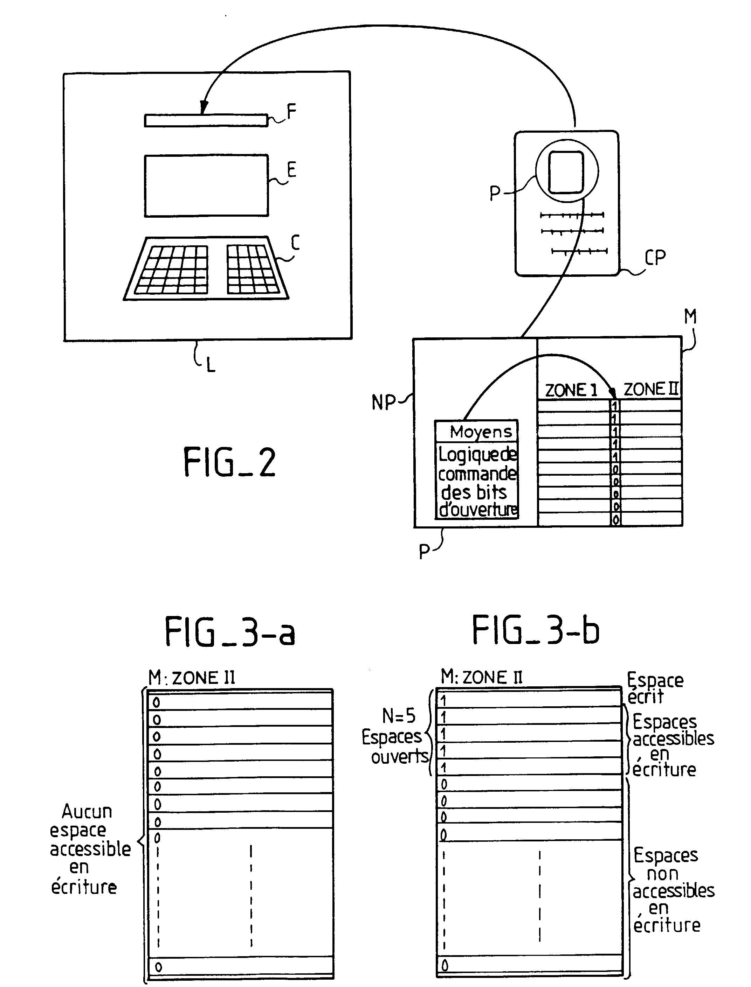

La figure 2 est un schéma du dispositif destiné à la mise en oeuvre du procédé décrit ci-dessus.

Il comporte un lecteur L avec la fente F destinée à l'insertion d'une carte à microcircuit CP, son écran E et son clavier F pour le dialogue interactif entre le lecteur L et le porteur de la carte. Une carte CP comporte le microcircuit P et éventuellement des pistes magnétiques et/ou des inscriptions en clair. Le microcircuit P comporte le microprocesseur µP incluant sous forme d'un programme préenregistré et inaccessible des moyens logiques de commande des bits d'ouverture, et un espace mémoire associé M de type EPROM ou EEPROM non effaçable, comportant les zones I et II d'enregistrement des transactions comportant chacune des espaces d'enregistrement prédéfinis. Dans chaque espace d'enregistrement de la ZONE II est prévu en tête le bit d'ouverture initialement à 0 et susceptible d'être mis à 1 par commande interne du microcircuit.

Les figures 3a et 3b illustrent la zone mémoire II, respectivement avant présentation du code porteur, aucun espace n'étant accessible en écriture, et après présentation du code porteur suite à une demande de transaction de montant inférieur au seuil S, le premier espace ayant reçu l'enregistrement de la transaction correspondante dans un mode de réalisation où N a été choisi égal à 5 : 4 espaces restent disponibles en écriture sans présentation du code, les suivants restant inaccessibles en écriture.

L'avantage du procédé de gestion de transactions selon l'invention est que la sécurité attachée aux transactions reste la même que dans les systèmes antérieurs pour les transactions de montants importants par la présentation systématique du code porteur, mais que simultanément des transactions de montants faibles peuvent être effectuées en réduisant notablement le nombre de présentations du code porteur,sans toutefois laisser la zone correspondante complètement ouverte, cela afin d'éviter les fraudes, notamment en cas de perte ou vol de la carte: le montant correspondant à une fraude est au plus égal à N.S .

L'invention n'est pas limitée au mode de réalisation précisément décrit et représenté. En particulier, il est possible de prévoir une partition de la mémoire de la carte en un nombre de zones supérieur, par exemple 3, en prévoyant une deuxième valeur de seuil, par exemple S'<S, la présentation du code permettant l'ouverture d'un nombre d'espaces d'enregistrement plus grand dans la troisième zone par exemple N', mais pour des transactions de montants faibles, inférieurs à S', la ZONE II étant alors réservée aux transactions de montants compris entre S et S'.

De plus, l'ordre des étapes dans l'organigramme de la figure 1 n'est donné qu'à titre d'exemple et comme indiqué ci-dessus les étapes 6 et 7 permettant de compléter à N le nombre d'espaces ouverts en ZONE II après présentation du code pour une transaction de montant élevé enregistrée en ZONE I peuvent être supprimées ou effectuées avant l'étape 5 de l'enregistrement en ZONE I.

## Revendications

1. Procédé de gestion de transactions dans un système mettant en oeuvre des lecteurs de cartes et des cartes à microcircuit associées dont les porteurs sont reconnus par le système au moyen de codes porteurs confidentiels et consistant à organiser l'espace mémoire des cartes destiné à l'enregistrement des transactions en au moins une première zone accessible pour des transactions sans présentation systématique du code porteur, caractérisé en ce qu'une présentation correcte du code par un porteur commande l'écriture de bits d'ouverture d'espaces d'enregistrement dans cette première zone jusqu'à ce que le nombre d'espaces ouverts soit égal à un nombre prédéterminé N, N étant supérieur ou égal à 2.

2. Procédé de gestion de transactions dans un système mettant en oeuvre des lecteurs de cartes et des cartes à microcircuit associées dont les porteurs sont reconnus par le système au moyen de codes porteurs confidentiels, caractérisé en ce qu'il consiste à organiser l'espace mémoire des cartes destiné à l'enregistrement des transactions en au moins deux zones distinctes, une première zone accessible pour un premier type de transactions, sans présentation systématique du code porteur à chaque transaction, et une deuxième zone accessible pour un deuxième type de transactions, par présentation du code à chaque transaction, une présentation correcte du code par un porteur commandant l'écriture de bits d'ouverture d'espaces d'enregistrement, dans cette première zone jusqu'à ce que le nombre d'espaces ouverts soit égal à un nombre prédéterminé N, N étant supérieur ou égal à 2.

3. Procédé selon la revendication 2 caractérisé en ce que les enregistrements des transactions sont orientés par le lecteur vers la première ou deuxième zone mémoire des cartes à microcircuit selon que le montant qu'elles représentent est respectivement inférieur ou supérieur à une valeur de seuil prédéterminée.

4. Procédé selon la revendication 3, caractérisé en ce que la composition du code porteur faisant suite à une demande de transaction d'un montant supérieur au seuil commande la lecture des bits d'ouverture des espaces non enregistrés suivant ceux déjà utilisés dans la première zone mémoire et l'écriture de ceux, jusqu'à N, non déjà écrits pour ouverture des espaces correspondants.

5. Procédé selon l'une des revendications 1 à 4, caractérisé en ce que, le nombre d'espaces mémoires ouverts pour des transactions dans la première zone est limité au nombre prédéterminé N, et en ce que, après chaque demande de transaction et affichage de son montant, le lecteur de carte demande la composition dù code lorsqu'il n'y a plus d'espaces d'enregistrement ouverts dans la première zone, la composition du code dans ce cas commandant à nouveau l'écriture de N bits d'ouverture dans les N premiers espaces non enregistrés suivant ceux déjà utilisés dans cette première zone.

6. Dispositif de gestion de transactions destiné à la mise en oeuvre du procédé selon l'une quelconque des revendications 1 à 5 comportant au moins un lecteur de cartes et des cartes à microcircuit associées dont les porteurs sont reconnus au moyen de codes porteurs confidentiels caractérisé en ce que le microcircuit de chaque carte comporte un espace mémoire destiné à l'enregistrement des transactions ayant au moins une première zone accessible pour un premier type de transactions, sans présentation systématique du code porteur à chaque transaction, et des moyens logiques inaccessibles commandant, lors d'une présentation correcte du code porteur, l'écriture de bits d'ouverture d'espaces d'enregistrements dans la première zone mémoire jusqu'à ce que le nombre d'espaces ouverts soit égal à un nombre prédéterminé N, N étant supérieur ou égal à 2, cette mémoire étant de type EPROM, ou EEPROM utilisée en EPROM, inscriptible et non effaçable.

7. Dispositif selon la revendication 6, caractérisé en ce que les moyens logiques de commande d'écriture des bits d'ouverture d'espaces d'enregistrement sont constitués d'un- programme pré-enregistré dans le microcircuit.

8. Dispositif selon l'une des revendications 6 ou 7, caractérisé en ce que les moyens logiques de commande d'écriture des bits d'ouverture d'espaces d'enregistrement sont constitués d'un circuit logique.

## Patentansprüche

1. Verfahren für das Management von Transaktionen in einem System, in dem Kartenleser und zugeordnete Mikroschaltungskarten, deren Träger vom System mittels vertraulicher Trägercodes wiedererkannt werden, betrieben werden, wobei das Verfahren darin besteht, daß der Speicherraum der Karten, der für die Aufzeichnung der Transaktionen vorgesehen ist, in wenigstens eine erste Zone organisiert wird, auf die die Transaktionen ohne systematische Darstellung des Trägercodes zugreifen können, dadurch gekennzeichnet, daß eine korrekte Darstellung des Codes durch einen Träger das Schreiben von Aufzeichnungsraum-Öffnungsbits in diese erste Zone befiehlt, bis die Anzahl offener Räume gleich einer vorgegebenen Anzahl N ist, wobei N größer oder gleich 2 ist.

2. Verfahren für das Management von Transaktionen in einem System, in dem Kartenleser und zugeordnete Mikroschaltungskarten, deren Träger vom System mittels vertraulicher Trägercodes wiedererkannt werden, betrieben werden, dadurch gekennzeichnet, daß es darin besteht, daß der Speicherraum der Karten, der für die Aufzeichnung von Transaktionen bestimmt ist, in wenigstens zwei verschiedene Zonen organisiert wird, eine erste Zone, auf die ein erster Typ von Transaktionen ohne systematische Darstellung des Trägercodes bei jeder Transaktion zugreifen kann, und eine zweite Zone, auf die ein zweiter Typ von Transaktionen durch Darstellung des Codes bei jeder Transaktion zugreifen kann, wobei eine korrekte Darstellung des Codes durch einen Träger das Schreiben von Aufzeichnungsraum-Öffnungsbits in diese erste Zone befiehlt, bis die Anzahl von offenen Räumen gleich einer vorgegebenen Anzahl N ist, wobei N größer oder gleich 2 ist.

3. Verfahren nach Anspruch 2, dadurch gekennzeichnet, daß die Aufzeichnungen von Transaktionen vom Leser zur ersten oder zur zweiten Speicherzone der Mikroschaltungskarten geleitet werden, je nachdem, ob der Betrag, den sie repräsentieren, kleiner oder größer als ein vorgegebener Schwellenwert ist.

4. Verfahren nach Anspruch 3, dadurch gekennzeichnet, daß die Bildung des Trägercodes, die nach einer Transaktionsanforderung eines Betrags, der größer als ein Schwellenwert ist, das Lesen der Öffnungsbits derjenigen Räume in der ersten Speicherzone, in die noch keine Aufzeichnung erfolgt ist, nach jenen, die bereits benutzt werden, sowie das Schreiben in jene Räume bis zur Anzahl N, in die noch nicht geschrieben worden ist, befiehlt, um die entsprechenden Räume zu öffnen.

5. Verfahren nach einem der Ansprüche 1 bis 4, dadurch gekennzeichnet, daß die Anzahl von für Transaktionen offenen Speicherräumen in der ersten Zone auf die vorgegebene Anzahl N begrenzt ist und daß nach jeder Anforderung einer Transaktion und der Anzeige ihres Betrags der Kartenleser die Bildung des Codes anfordert, wenn in der ersten Zone keinerlei offene Aufzeichnungsräume mehr vorhanden sind, wobei die Bildung des Codes in diesem Fall erneut das Schreiben von N Aufzeichnungsbits in die N ersten Räume, in die noch keine Aufzeichnung erfolgt ist, nach jenen in dieser ersten Zone, die bereits benutzt werden, befiehlt.

6. Vorrichtung für das Management von Transaktionen, die für die Ausführung des Verfahrens nach irgendeinem der Ansprüche 1 bis 5 vorgesehen ist, mit wenigstens einem Kartenleser und zugeordneten Mikroschaltungskarten, deren Träger mittels vertraulicher Trägercodes wiedererkannt werden, dadurch gekennzeichnet, daß die Mikroschaltung jeder Karte einen Speicherraum enthält, der für die Aufzeichnung von Transaktionen bestimmt ist und eine erste Zone, auf die ein erster Typ von Transaktionen ohne systematische Darstellung des Trägercodes bei jeder Transaktion zugreifen kann, enthält, und mit Logikmitteln, auf die nicht zugegriffen werden kann und die bei einer korrekten Darstellung des Trägercodes das Schreiben von Aufzeichnungsraum-Öffnungsbits in die erste Zone befehlen, bis die Anzahl offener Räume gleich einer vorgegebenen Anzahl N ist, wobei N größer oder kleiner 2 ist, wobei dieser Speicher vom Typ EPROM oder EEPROM, der als EPROM verwendet wird, ist, in den geschrieben und der nicht gelöscht werden kann.

7. Vorrichtung nach Anspruch 6, dadurch gekennzeichnet, daß die Logikmittel, die das Schreiben von Aufzeichnungsraum-Öffnungsbits befehlen, durch ein im voraus in die Mikroschaltung aufgezeichnetes Programm gebildet sind.

8. Vorrichtung nach irgendeinem der Ansprüche 6 und 7, dadurch gekennzeichnet, daß die Logikmittel, die das Schreiben der Aufzeichnungsraum-Öffnungsbits befehlen, aus einer Logikschaltung gebildet sind.

## Claims

1. A transaction management method in a system utilising card readers and associated microcircuit cards in which the card-holders are recognised by the system by means of confidential card-holder codes and consisting of organising the memory space of the cards which is intended for recording transactions in at least a first zone accessible for transactions without systematic presentation of the card-holder code,
**characterised in that** a correct presentation of the code by a card-holder initiates the writing of opening bits of recording spaces in this first zone until the number of open spaces is equal to a predetermined number N, N being greater than or equal to 2.

2. A transaction management method in a system utilising card readers and associated microcircuit cards in which the card-holders are recognised by the system by means of confidential card-holder codes,
**characterised in that** it consists of organising the memory space of the cards which is intended for recording transactions in at least two distinct zones, a first zone accessible for a first transaction type, without systematic presentation of the card-holder code at each transaction, and a second zone accessible for a second transaction type, by presentation of the code at each transaction, a correct presentation of the code by a card-holder initiating the writing of opening bits of recording spaces in this first zone until the number of open spaces is equal to a predetermined number N, N being greater than or equal to 2.

3. A method according to Claim 2,
**characterised in that** the recordings of the transactions are directed by the reader towards the first or second memory zone of the microcircuit cards depending on whether the amount which they represent is respectively lower or higher than a predetermined threshold value.

4. A method according to claim 3,
**characterised in that** the composition of the card-holder code following a transaction request for an amount greater than the threshold initiates the reading of the opening bits of the unrecorded spaces following those already used in the first memory zone and the writing thereof, up to N, not already written for opening corresponding spaces.

5. A method according to one of Claims 1 to 4,
**characterised in that** the number of open memory spaces for transactions in the first zone is limited to the predetermined number N,
and in that after each transaction request and display of its amount, the card reader requests the composition of the code when there are no longer any open recording spaces in the first zone, the composition of the code in this case again initiating the writing of N opening bits in the first N unrecorded spaces following those already used in this first zone.

6. A transaction management device intended for the use of the method according to any one of Claims 1 to 5, comprising at least one card reader and associated microcircuit cards in which the card-holders are recognised by means of confidential card-holder codes,
**characterised in that** the microcircuit of each card comprises a memory space intended for the recording of transactions having at least a first zone accessible for a first transaction type, without systematic presentation of the card-holder code at each transaction, and inaccessible logic means initiating, with a correct presentation of the card-holder code, the writing of opening bits of recording spaces in the first memory zone until the number of open spaces is equal to a predetermined number N, N being greater than or equal to 2, this memory being of the EPROM type, or EEPROM type used in EPROM, non-recordable and non-erasable.

7. A device according to Claim 6,
**characterised in that** the logic means for initiating the writing of the opening bits of recording spaces are formed by a program prerecorded in the microcircuit.

8. A device according to one of Claims 6 or 7,
**characterised in that** the logic means for initiating writing of the opening bits of recording spaces are formed by a logic circuit.
